# DEMANDE DE BREVET EUROPEEN

(11) **EP 0 750 151 A1**
(43) Date de publication de la demande: **27.12.1996**
(21) Numéro de dépôt: 96110059.1
(22) Date de dépôt: 21.06.1996
(51) Int. Cl.: F16L 37/02, F16L 21/00

(54) **Tubulure métallique résistant à la flexion**

(30) Priorité: 21.06.1995 FR 9507423
(71) Demandeur: Valeo Climatisation, 78321 La Verrière (FR)
(72) Inventeur: Martins, Carlos, 78490 Monfort L'Amaury (FR)
(74) Mandataire: Gamonal, Didier

(57) **Abrégé**

La tubulure est composée de deux tronçons (1, 2) emmanchés l'un dans l'autre dans une région médiane de la longueur de la tubulure et munis de collerettes respectives (5, 6) formées par plissement de leurs parois et destinées à absorber par leurs déformations les contraintes en flexion exercées sur la tubulure.

Application aux raccordements des radiateurs dans les circuits de refroidissement et/ou de chauffage des véhicules automobiles.

## Description

L'invention concerne une tubulure métallique pour la circulation d'un fluide entre deux éléments d'un circuit, notamment d'un circuit de fluide servant pour les fonctions de refroidissement et/ou de chauffage dans un véhicule automobile.

Les tubulures reliant un radiateur de chauffage à d'autres éléments du circuit ont généralement une longueur relativement importante. Au cours des manipulations nécessitées par le montage du circuit ou par des réparations, ces tubulures peuvent être soumises à des efforts de flexion conduisant soit à la transmission de contraintes au point de jonction avec le radiateur, risquant d'endommager la liaison, soit à un pliage de la tubulure elle-même.

Le but de l'invention est de remédier à ces inconvénients.

L'invention vise notamment une tubulure du genre défini en introduction, et prévoit qu'elle est composée d'au moins deux tronçons parcourus successivement par le fluide et se raccordant mutuellement, par emmanchement du premier tronçon dans le second tronçon, en une région médiane de la longueur de la tubulure, l'un au moins desdits tronçons présentant, au voisinage de la zone d'emmanchement, une collerette radialement extérieure formée par plissement de sa paroi.

Des caractéristiques optionnelles de l'invention, complémentaires ou alternatives, sont énoncées ci-après :
- Ladite collerette définit une gorge annulaire interne de largeur non nulle.
- Une collerette est prévue sur le premier tronçon, sur laquelle vient en butée l'extrémité libre du second tronçon.
- L'extrémité libre du second tronçon est évasée pour faciliter la pénétration du premier tronçon.
- Des collerettes sont prévues sur les deux tronçons, axialement de part et d'autre de la zone d'emmanchement.

L'invention a également pour objet un procédé d'assemblage d'une tubulure telle que définie ci-dessus, dans lequel on engage l'extrémité libre du premier tronçon dans celle du second et on sollicite l'une vers l'autre les collerettes des deux tronçons au moyen d'un outil prenant appui sur celles-ci pour emmancher les tronçons l'un dans l'autre.

Avantageusement, on poursuit l'action de l'outil jusqu'à ce que l'extrémité libre du second tronçon vienne en butée sur la collerette du premier tronçon.

Les caractéristiques et avantages de l'invention seront exposés plus en détail dans la description ci-après, en se référant aux dessins annexés, sur lesquels :
- la figure 1 est une vue en demi-coupe axiale montrant les régions d'extrémités de deux tronçons s'engageant l'un dans l'autre en vue de la réalisation d'une tubulure selon l'invention; et
- la figure 2 est une vue analogue à la figure 1, montrant la tubulure réalisée par emmanchement des tronçons l'un dans l'autre.

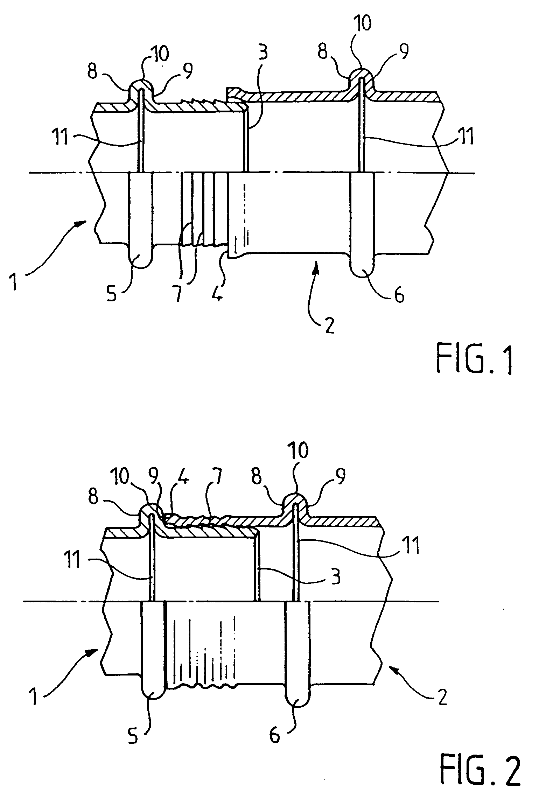

On voit à la figure 1 un premier tronçon de tubulure 1 et un second tronçon de tubulure 2, par exemple en alliage de cuivre. Le diamètre intérieur du tronçon 2 correspond à peu près au diamètre extérieur du tronçon 1 de façon à permettre l'emmanchement d'une région du tronçon 1 adjacente à son extrémité libre 3 dans une région du tronçon 2 adjacente à son extrémité libre 4. Cette dernière extrémité est légèrement évasée de façon à recevoir avec jeu l'extrémité 3 pour faciliter le début de l'introduction du tronçon 1 dans le tronçon 2.

Les tronçons 1 et 2 présentent, au voisinage de leurs extrémités 3 et 4, des collerettes respectives 5 et 6 formées par le plissement de leurs parois radialement vers l'extérieur. Ces collerettes font donc saillie par rapport aux diamètres extérieurs des tronçons, de sorte qu'il est possible d'appuyer deux éléments d'un outil, par exemple les deux branches, de forme appropriée, d'une pince, sur la face de chaque collerette tournée à l'opposé de l'autre collerette pour solliciter celles-ci l'une vers l'autre et faire pénétrer le tronçon 1 à l'intérieur du tronçon 2, jusqu'à ce que l'extrémité 4 de ce dernier vienne en butée contre la collerette 5, comme illustré à la figure 2.

Comme on le voit à la figure 1, la région d'emmanchement du tronçon 1 présente sur sa face extérieure, de façon connue en soi, des saillies annulaires à profil en dents de scie 7 permettant un accrochage mutuel des deux tronçons et renforçant par conséquent la liaison mécanique de ceux-ci. L'étanchéité de cette liaison peut être assurée notamment par brasage ou par collage.

Chacune des collerettes 5 et 6 comporte deux portions de parois sensiblement radiales 8 et 9 écartées l'une de l'autre dans la direction axiale et raccordées entre elles, radialement vers l'extérieur, par une portion arrondie 10. Ces collerettes définissent donc des gorges annulaires 11 de largeur axiale non nulle. Une contrainte de flexion exercée sur la tubulure peut ainsi être absorbée par une déformation de l'une et/ou de l'autre des collerettes, avec désalignement des axes des deux tronçons de part et d'autre de celles-ci, sans qu'il en résulte ni perte d'étanchéité, ni rupture, ni affaiblissement mécanique de la tubulure ou de ses liaisons avec les autres éléments du circuit.

Bien que n'étant pas indispensables, la présence de deux collerettes, et l'écartement entre les parois radiales 8 et 9 de celles-ci, augmentent les possibilités de déformations par rapport à une seule collerette et à des parois accolées.

## Revendications

1. Tubulure métallique pour la circulation d'un fluide entre deux éléments d'un circuit, notamment d'un circuit de fluide servant pour les fonctions de refroidissement et/ou de chauffage dans un véhicule automobile, caractérisé en ce qu'elle est composée d'au moins deux tronçons (1, 2) parcourus successivement par le fluide et se raccordant mutuellement, par emmanchement du premier tronçon (1) dans le second tronçon (2), en une région médiane de la longueur de la tubulure, l'un au moins desdits tronçons présentant, au voisinage de la zone d'emmanchement, une collerette (5, 6) radialement extérieure formée par plissement de sa paroi.

2. Tubulure selon la revendication 1, caractérisé en ce que ladite collerette définit une gorge annulaire interne (11) de largeur non nulle.

3. Tubulure selon l'une des revendications 1 et 2, caractérisé en ce qu'une collerette (5) est prévue sur le premier tronçon (1), sur laquelle vient en butée l'extrémité libre (4) du second tronçon.

4. Tubulure selon l'une des revendications précédentes, caractérisé en ce que l'extrémité libre (4) du second tronçon est évasée pour faciliter la pénétration du premier tronçon.

5. Tubulure selon l'une des revendications précédentes, caractérisé en ce que des collerettes (5, 6) sont prévues sur les deux tronçons (1, 2), axialement de part et d'autre de la zone d'emmanchement.

6. Procédé d'assemblage d'une tubulure selon la revendication 5, dans lequel on engage l'extrémité libre (3) du premier tronçon dans celle (4) du second et on sollicite l'une vers l'autre les collerettes (5, 6) des deux tronçons au moyen d'un outil prenant appui sur celles-ci pour emmancher les tronçons l'un dans l'autre.

7. Procédé selon la revendication 6 pour l'assemblage d'une tubulure selon la revendication 3, caractérisé en ce qu'on poursuit l'action de l'outil jusqu'à ce que l'extrémité libre (4) du second tronçon vienne en butée sur la collerette (4) du premier tronçon.
